(19) Europäisches Patentamt

European Patent Office

Office européen des brevets

(11) **EP 2 698 546 B1**

(12) **EUROPEAN PATENT SPECIFICATION**

(45) Date of publication and mention
of the grant of the patent:
**11.10.2017 Bulletin 2017/41**

(51) Int Cl.:
***F15B 11/12*** *(2006.01)*     ***F16H 61/30*** *(2006.01)*

(21) Application number: **12180385.2**

(22) Date of filing: **14.08.2012**

(54) **Four-state fluid cylinder, method of operating the same, and motor vehicle transmission**

Vierstellungsflüssigkeitszylinder, Betriebsverfahren und Kraftfahrzeuggetriebe

Cylindre pour fluide à quatre états, son procédé de fonctionnement et transmission pour véhicule automobile

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | • **Vass, Sandor**<br>**2142 Nagytarcsa (HU)** |
| | (74) Representative: **Schönmann, Kurt**<br>**c/o Knorr-Bremse AG**<br>**Patentabteilung V/RG**<br>**Moosacher Str. 80**<br>**80809 München (DE)** |
| (43) Date of publication of application:<br>**19.02.2014 Bulletin 2014/08** | |
| (73) Proprietor: **KNORR-BREMSE Systeme für Nutzfahrzeuge GmbH**<br>**80809 München (DE)** | (56) References cited:<br>**EP-A1- 0 803 651     EP-A2- 0 813 006**<br>**DE-A1- 19 905 626     FR-A1- 2 007 681**<br>**FR-A1- 2 667 908     FR-A1- 2 889 566** |
| (72) Inventors:<br>• **Trencseni, Balazs**<br>**1037 Budapest (HU)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a four-state fluid cylinder, a motor vehicle transmission and a method of operating a four-state fluid cylinder.

Four-state pneumatic work cylinders are used commonly in the industry, for example in the automotive field for automated or servoshift gearboxes. Four-state cylinders may be needed for a four-rail gearbox in order to select one of four possible channels. Concerning today's cylinders, two solutions depending on the number of magnetic valves controlling the cylinder have become widespread. The most common configuration contains four three-way and two-position normally closed magnetic valves, three pistons with different diameters and thus four chambers. Another possible solution with three of three-way and two-position valves (3/2 valves) is described e.g. in DE 10 2006 035 938 B4, which discloses a gear actuator having an actuating cylinder.

EP 0 803 651 A1 discloses a fluid-controlled actuator assembly for a gearbox of a vehicle. The assembly comprises flexible means associated with a mobile element and suitable for maintaining the mobile element in a rest position interposed between a stop position and one of two lateral positions when fluid is discharged from both of two chambers.

It is the object of the present invention to provide an improved four-state fluid cylinder, an improved motor vehicle transmission and an improved method of operating a four-state fluid cylinder.

This object is achieved by a four-state fluid cylinder, a motor vehicle transmission and a method of operating a four-state fluid cylinder according to the main claims.

The present invention is based on the finding that a four-state fluid cylinder can be designed so as to be operated by means of only two valves and two springs. In particular, a four-state pneumatic work cylinder can be designed so as to be operated by means of only two three-way, two-position, normally closed (3/2 NC) solenoid valves. Thus, an advantageous concept of a four-state pneumatic work cylinder with less than three 3/2 valves is provided. The number of magnet valves is reduced by replacing all but two cylinder-actuating magnet valves by other components for accumulating energy, for example springs.

Advantageously, reducing the number of valves also reduces the space consumption of the valves, which makes the cylinder according to embodiments of the present invention easier to use in places where usable space is scarce. Hence, it is no longer necessary to separate the valves from the work cylinder and move them to a different place. In this respect, the reaction or switching time can be minimized. Another problem is of course the price of machining valve seats, air channels and the magnet valves themselves can be reduced.

The present invention provides a four-state fluid cylinder according to claim 1. The four-state fluid cylinder may be a pneumatic or hydraulic cylinder for use in a motor vehicle transmission gearbox or the like. The cylinder housing may comprise a cylinder barrel, a cylinder head representing the first end of the cylinder housing where the piston rod protrudes from the cylinder housing, and a bottom end or cap representing the second end of the cylinder housing. The main piston may be mechanically connected or coupled to the piston rod. The piston rod may pass through an opening in the first end of the cylinder housing, wherein a first sealing element, for example a sealing ring or the like, may be arranged in the opening so as to seal a gap between the piston rod and the first end of the cylinder housing in a fluid-tight manner. The first spring and the second spring may be helical springs or the like. The first spring may be arranged within the first chamber. The piston rod may extend through a space surrounded by the first spring. The first spring may abut on an inner wall surface of the first end of the cylinder housing and on a surface of the main piston facing the first end of the cylinder housing. The first chamber may be sealed in a fluid-tight manner by a portion of an inner wall surface of the cylinder housing and by a surface of the main piston facing the first end of the cylinder housing. A second sealing element may be arranged so as to seal a gap between a circumferential surface of the main piston and the inner wall surface of the cylinder housing in a fluid-tight manner. The first valve may be connected to the first chamber by means of a fluid line which opens into the first chamber. The floating piston may substantially be ring-shaped or the like. A third sealing element may be arranged so as to seal a gap between an inner circumferential surface of the floating piston and a circumferential surface of the main piston in a fluid-tight manner. A fourth sealing element may be arranged so as to seal a gap between an outer circumferential surface of the floating piston and the inner wall surface of the cylinder housing in a fluid-tight manner. The second chamber may be sealed in a fluid-tight manner by a portion of an inner wall surface of the cylinder housing and by surfaces of the main and floating pistons facing the second end of the cylinder housing. The piston buffer and the second spring may be arranged within the second chamber. The second spring may abut on an inner wall surface of the second end of the cylinder housing and on a surface of the piston buffer facing the second end of the cylinder housing. The floating piston may be movable into and away from abutment onto a surface of the piston buffer facing the floating piston. The piston buffer may comprise a recessed portion formed in a surface of the piston buffer facing the floating piston, wherein the recessed portion is dimensioned for accommodating an end portion of the main piston facing the second end of the cylinder housing. The second valve may be connected to the second chamber by means of a fluid line which opens into the second chamber.

According to one embodiment, a spring force of the first spring may be smaller than or equal to a spring force of the second spring. Thus, a rate or spring constant of the first spring may be smaller than or equal to a rate or spring constant of the second spring. The first spring and the second spring may have a predetermined ratio of their spring forces or spring constants. The stiffness and preload characteristics of the first and second springs may determine the spring forces in different states of the cylinder. It is an advantage of this embodiment that the main and floating pistons may be moved to accurately defined positions by a force equilibrium established by the spring forces of the first and second springs.

According to another embodiment, the first and second valves may be three-way, two-position, normally closed solenoid valves. Each of the magnet valves may have three ports to which fluid lines may be connected. A first port of the first valve may be connected to the first chamber of the cylinder via a fluid line. A first port of the second valve may be connected to the second chamber of the cylinder via a fluid line. Second ports of the first and second valves may be connected to a fluid inlet or a pressurised fluid reservoir. Third ports of the first and second valves may be connected to a fluid outlet. The first and second valves and be formed so as to connect their first ports to their third ports in a first or closed valve position. The first and second valves and be formed so as to connect their first ports to their second ports in a second or open valve position. It is an advantage of this embodiment that solenoid valves are highly reliable, long-life, compact, power-efficient devices and allow for safe and fast switching operation.

According to a further embodiment, the cylinder may further comprise a stop element attached to the cylinder housing and onto which the cylinder buffer is biased into abutment by the second spring. The stop element may comprise a fixing ring or the like, which may protrude from an inner wall surface of the cylinder housing. The second spring may be arranged between the stop element and an inner wall surface of the second end of the cylinder housing. A portion of the cylinder buffer may be movably engaged between the second spring and the stop element. It is an advantage of this embodiment that the cylinder buffer may be held at a defined position unless a force greater than the spring force of the second spring acts on the cylinder buffer in the direction towards the second end of the cylinder housing.

According to a still further embodiment, an effective cross-sectional area of the main piston on a surface facing the first chamber may be smaller than effective cross-sectional areas of the main and floating pistons on a surface facing the second chamber. In other words, the effective cross-sectional area of the main piston on the side of the first chamber is the cross-sectional area upon which a fluid load of fluid in the first chamber may act or exert pressure. Thus, the effective cross-sectional area of the main and floating pistons on the side of the second chamber comprises the cross-sectional areas of the main and floating pistons combined upon which a fluid load of fluid in the second chamber may act or exert pressure. The main diameter of the main piston on the side of the first chamber and the main diameter of the piston rod determine the effective cross-sectional area of the main piston on the side in the first chamber. The diameter of the floating piston and the diameter of the main piston on the side of the second chamber determine the effective cross-sectional area of the pistons on the side of the second chamber. Equal fluid pressures in the first and second chambers may result in the main and floating pistons to be moved towards the first end of the cylinder housing due to the aforementioned different effective cross-sectional areas. It is an advantage of this embodiment that the main and floating pistons may be moved to accurately defined positions by a force equilibrium established by the fluid load on the effective cross-sectional areas of the main and floating pistons.

According to the invention, the main piston has a larger-diameter portion facing the first chamber and abutting on the cylinder housing inner wall surface, a smaller-diameter portion facing the second chamber and a step portion in a transition region between the larger-diameter portion and the smaller-diameter portion, wherein the floating piston may fit around part of the smaller-diameter portion and may be movable into and out of abutment onto the step portion. It is an advantage of this embodiment that the main and floating pistons can be accommodated so as to be movable with respect to each other while saving space within the cylinder.

According to yet another embodiment, the cylinder housing may comprise a through-hole in a region of a variable-volume third chamber formable between the first and second chambers by movement of the main and floating pistons. The third chamber may be separated from any contact with pressurized fluid. The volume of the third chamber may change with relative movement of the main and floating pistons with respect to each other and with movement of the main and floating pistons relative to the cylinder housing. The through-hole and the formation of the third chamber allow for smooth movement of the main and floating pistons within the cylinder housing.

Furthermore, the present invention provides a motor vehicle transmission, comprising:

a four-rail gearbox having four shift channels; and

a version of the above-mentioned four-state fluid cylinder for selecting one of the shift channels at a time.

The motor vehicle may be a passenger vehicle or a commercial vehicle. The gearbox may be an automatic gearbox or a servoshift gearbox. The four-state fluid cylinder according to embodiment of the present invention may be used advantageously in junction with the gearbox in the context of the motor vehicle transmission. In particular, the fluid cylinder may be used to enable shifting operations in a shifter mechanism for the gearbox. For example, the shifter mechanism may be used for a 6-speed light-duty commercial vehicle's gearbox with 4 channels, with a first channel for reverse and optionally crawler gears, a second channel for first and second gears, a third channel for third and fourth gears, and a fourth channel for fifth and sixth gears.

Furthermore, the present invention provides a method of operating a four-state fluid cylinder according to claim 8. The method of operating may advantageously be performed in conjunction with the fluid cylinder according to embodiments of the present invention. The first state of the cylinder may represent a still state or rest state of the cylinder. In the first state, none of the valves are actuated, thus depressurizing the first and second chambers. The positions of the main and floating pistons, and hence the protruding length of the piston rod, in the first state are depending only on the spring forces of the first and second springs. When the method is applied to a cylinder used in conjunction with a four-rail motor vehicle gearbox, the first state may represent selection of a first channel of the gearbox. Thus, the first channel is selected in the first state or still state of the cylinder, wherein none of the first and second valves are actuated. Hence, the first state or still state of the cylinder is set if the first and second chambers are depressurized or exhausted. In the four-rail motor vehicle gearbox example for application, the second state may represent selection of a second channel of the gearbox. The positions of the main and floating pistons, and hence the protruding length of the piston rod, in the second state are depending on the main and floating piston diameters, the piston rod diameter, the pneumatic pressure in the first and second chambers and the spring force of the first spring, which is compressed in the second state. In the four-rail motor vehicle gearbox example for application, the third state may represent selection of a third channel of the gearbox. The positions of the main and floating pistons, and hence the protruding length of the piston rod, in the third state are depending on the main piston's smaller diameter, the pneumatic pressure in the second chamber and the spring force of the first spring, which is compressed in the third state. In the four-rail motor vehicle gearbox example for application, the fourth state may represent selection of a fourth channel of the gearbox. The positions of the main and floating pistons, and hence the protruding length of the piston rod, in the fourth state are depending on the main piston's larger diameter, the piston rod diameter, the pneumatic pressure in the first chamber and the spring forces of the first and second springs, which are compressed in the fourth state.

According to one embodiment, the step of controlling may be performed repeatedly in order to set the cylinder to different states in an arbitrary manner. The cylinder may be set to different states in a sequential or non-sequential manner. Any one of the states may be set after any other state by actuating none, one or both of the valves, thus pressurizing and/or depressurizing the adequate chambers or chambers. There is no default order in the switching of states, which makes the method and the cylinder flexibly employable in a variety of applications, scenarios and fields.

Preferred embodiments of the present invention will be explained in greater detail in the following with reference to the drawings, in which:

Fig. 1     shows a schematic view of a motor vehicle transmission;

Fig. 2     shows a partial cross-sectional view of a fluid cylinder;

Figs. 3 to 6    show partial cross-sectional views of a fluid cylinder according to an embodiment of the present invention in four different states;

Fig. 7     shows a diagram of forces within the fluid cylinder of Figs. 3 to 6; and

Fig. 8     shows a flowchart of a method according to an embodiment of the present invention.

Throughout the following description of the preferred embodiments of the present invention, the same or similar reference numerals may be used for similar or similarly acting elements shown in the various figures, with repeated description of such elements being omitted.

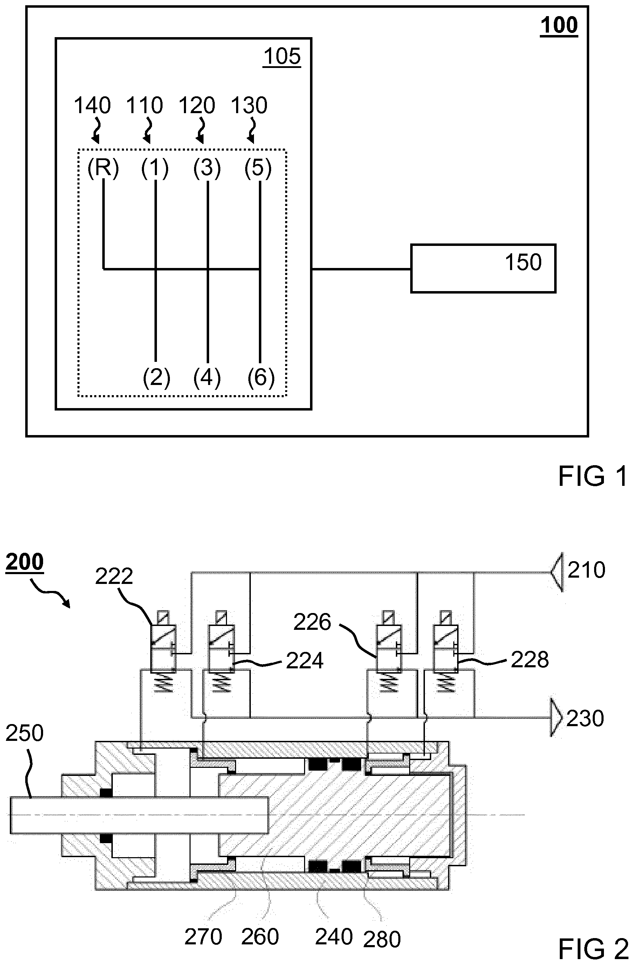

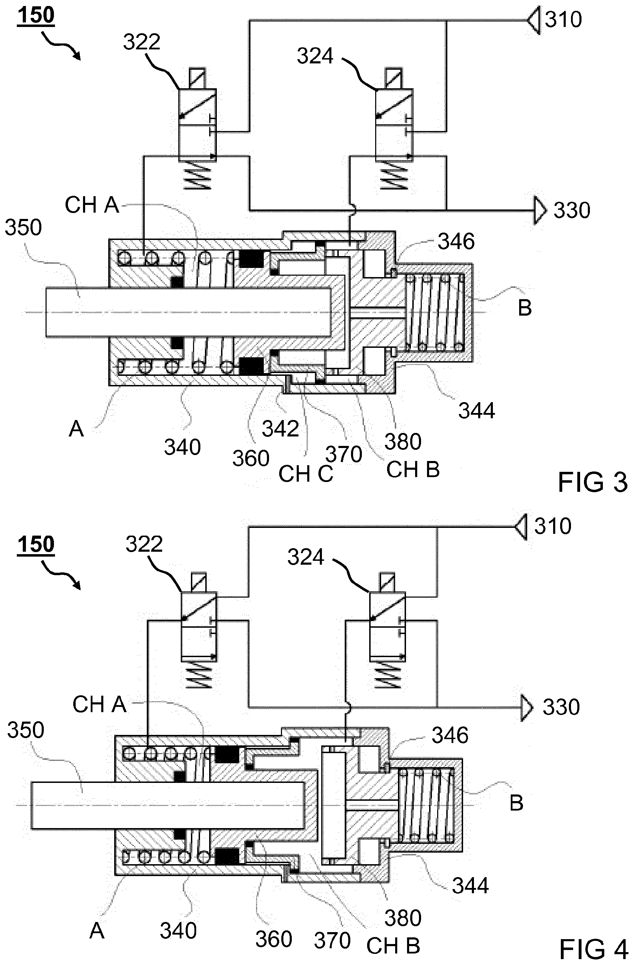

Fig. 1 shows a schematic view of a motor vehicle transmission 100 according to an embodiment of the present invention. The transmission 100 may be used in a passenger vehicle or commercial vehicle. The transmission 100 comprises a four-rail gearbox 105 having four shift channels 110, 120, 130 and 140 and a work cylinder 150, which may be a fluid cylinder, e.g. a pneumatic cylinder, as shown in Figs. 3 to 6. The work cylinder 150 is connected to the gearbox 105 and used in conjunction with a gear shifter mechanism of the gearbox 105 of the transmission 100. The four shift channels 110, 120, 130 and 140 comprise a first channel 110 for first (1) and second (2) gears, a second channel 120 for third (3) and fourth (4) gears, a third channel 130 for fifth (5) and sixth (6) gears, and a fourth channel 140 for reverse (R) gear. In another embodiment of the present invention, the fourth channel 140 may also be for a crawler gear of a commercial vehicle. The work cylinder 150 is arranged and controllable to actuate at least part of the gear shifter mechanism of the gearbox 105 by being set to one of four possible states in order to select one of the shift channels at a time.

Fig. 2 shows a partial cross-sectional view of a fluid cylinder 200 in a commonly employed configuration. Fig.

2 shows the fluid cylinder 200, a fluid inlet 210, four valves 222, 224, 226 and 228, in particular three-way and two-position normally closed magnet valves (3/2 NC magnet valves), a fluid outlet 230, a cylinder housing 240, a piston rod 250, a main piston 260 and two floating pistons 270 and 280. The valves 222, 224, 226 and 228 are connected between the fluid inlet 210 and the fluid outlet 230 via fluid lines. The valves 222, 224, 226 and 228 each also are connected to a different chamber formed inside the cylinder housing 240 by the three pistons 260, 270 and 280 having different diameters. In the cylinder 200 shown in Fig. 2, the four 3/2 NC magnet valves 222, 224, 226 and 228 are formed to control the pressures are fluid in the four pressure chambers, thus moving the main piston 260 and the two floating pistons 270 and 280, wherein the main piston 260 is moved between four positions, so as to set the cylinder 200 to four different states.

Fig. 3 shows a partial cross-sectional view of a fluid cylinder 150 according to an embodiment of the present invention in a first state of the cylinder 150. The fluid cylinder 150 may be employed as the work cylinder in the motor vehicle transmission of Fig. 1. The fluid cylinder 150 according to this embodiment of the present invention is a four-state pneumatic work cylinder. Fig. 3 shows the fluid cylinder 150, a fluid inlet 310 or pressurized fluid reservoir, a first valve 322 and a second valve 324, which are three-way and two-position normally closed magnet valves (3/2 NC magnet valves), a fluid outlet 330, a cylinder housing 340, a bleed opening 342, a cylinder cover 344 or cap, a stop element 346 or fixing ring, a piston rod 350, a main piston 360, a floating piston 370, a piston buffer 380, a first spring A, a second spring B, a first chamber CH A, a second chamber CH B and a third chamber CH C.

The cylinder housing 340 comprises a cylinder barrel representing a main body of the cylinder housing 340, the bleed opening 342, the cylinder cover 344 and the stop element 346. The cylinder housing 340 has a first end, which represents a cylinder head and at which the piston rod 350 protrudes from inside the cylinder housing 340, and a second end or bottom end or cap, at which the cylinder cover 344 is arranged. In the embodiment of the present invention shown in Fig. 3, the cylinder cover 344 is a distinct component from the cylinder barrel and is mechanically joined with the cylinder barrel in a fluid-tight manner to form the cylinder housing 340. In other embodiments, the cylinder cover 344 may be integrally formed with the cylinder barrel of the cylinder housing 340, wherein the cylinder head may be a distinct component from the cylinder barrel and may be mechanically joined with the cylinder barrel in a fluid-tight manner. The cylinder barrel of the cylinder housing 340 has a smaller-diameter portion and a larger-diameter portion with a step portion therebetween where the inside and outside diameters of the cylinder barrel change from the smaller-diameter portion to the larger-diameter portion. The smaller-diameter portion of the cylinder barrel extends from the first end of the cylinder housing 340 to the step portion of the cylinder barrel. The larger-diameter portion of the cylinder barrel extends from the step portion towards the second end of the cylinder housing 340. The cylinder cover 344 has a larger-diameter portion where it is joined with the cylinder barrel and a smaller-diameter portion at the second end of the cylinder housing 340 with a step portion therebetween. At the first end of the cylinder housing 340, there is arranged a through-hole to which the piston rod 350 passes for sliding movement thereof. The through-hole in the first end of the cylinder housing 340 is provided with a first sealing element, for example a sealing ring or the like, for sealing a gap between the piston rod 350 and a wall of the though-hole in the first end of the cylinder housing 340 in a fluid-tight manner. The bleed opening 342 of the cylinder housing 340 is a though-hole through a wall of the cylinder barrel and is arranged in the step portion of the cylinder barrel. The stop element 346 is arranged in the smaller-diameter portion of the cylinder cover 344. The stop element 346 is a ring-shaped component fixed on an inner wall surface of the cylinder cover 344.

The piston rod 350 is mechanically connected to the main piston 360. The main piston 360 is arranged inside the cylinder housing 340 so as to be movable along the smaller-diameter portion of the cylinder barrel. The main piston 360 has a larger-diameter portion arranged facing the first end of the cylinder housing 340, a smaller-diameter portion arranged tasting the second end of the cylinder housing 340, and a step portion in a transition region therebetween, wherein the step portion represents a perpendicular surface with respect to a cylinder longitudinal axis. A second sealing element is arranged around a circumferential surface of the larger-diameter portion of the main piston 360 so as to seal a gap between the circumferential surface of the main piston 360 and an inner wall surface of the cylinder barrel in a fluid-tight manner.

The first chamber CH A or first cylinder chamber is formed and sealed in a fluid-tight manner by a portion of the inner wall surface of the cylinder housing 340, which portion comprises the first end of the cylinder housing 340 and the inner wall surface of the smaller-diameter portion of the cylinder barrel, by a surface of the main piston 360 facing the first end of the cylinder housing 340 and by the first and second sealing elements. The first spring A is arranged within the first chamber CH A. The first spring A is arranged between and abuts on an inner wall surface of the first end or cylinder head of the cylinder housing 340 and on the surface of the main piston 360 facing the first end of the cylinder housing 340. The piston rod 350 extends through a space surrounded by the first spring A, which is a helical spring.

The first chamber CH A is connected to a first port of the first valve 322 by means of a fluid line. A second port of the first valve 322 is connected to the fluid inlet 310, and a third port of the first valve 322 is connected to the fluid outlet 330. The first valve 322 is operable to connect its first port to either its second or third port. In Fig. 3, the first port of the first valve 322 is connected to the third port of the first valve 322, thus depressurizing the first chamber CH A by connecting the first chamber CH A with the fluid outlet 330.

The floating piston 370 is arranged between the larger-diameter portion of the main piston 360 and the second end of the cylinder housing 340. In particular, the floating piston 370 is arranged movably fitting around part of the smaller-diameter portion of the main piston 360. The floating piston 370 is arranged between the smaller-diameter portion of the main piston 360 and the cylinder barrel of the cylinder housing 340. A third sealing element is arranged so as to seal a gap between an inner circumferential surface of the floating piston 370 and a circumferential surface of the smaller-diameter portion of the main piston 360 in a fluid-tight manner. A fourth sealing element is arranged so as to seal a gap between an outer circumferential surface of the floating piston 370 and the inner wall surface of the cylinder barrel of the cylinder housing 340 in a fluid-tight manner.

The second chamber CH B or second cylinder chamber is formed and sealed in a fluid-tight manner by a portion of the inner wall surface of the cylinder housing 340, which portion comprises the second end of the cylinder housing 340 with the cylinder cover 344 and a portion of the inner wall surface of the larger-diameter portion of the cylinder barrel, by surfaces of the main piston 360 and the floating piston 370 facing the second end of the cylinder housing 340 and by the third and fourth sealing elements. The piston buffer 380 and the second spring B are arranged within the second chamber CH B.

The piston buffer 380 is arranged between the second spring B and the main and floating pistons 360 and 370. The piston buffer 380 comprises a first surface facing the main and floating pistons 360 and 370 and a second surface facing the second end of the cylinder housing 340. The piston buffer 380 comprises a recessed portion formed in the first surface of the piston buffer 380. The recessed portion is dimensioned for accommodating an end section of the smaller-diameter portion of the main piston 360, which is facing the second end of the cylinder housing 340. The recessed portion is surrounded by a wall portion of the piston buffer 380. The piston buffer 380 further comprises fluid bleed holes, three of which are visible in Fig. 3, formed as through-holes through the wall portion and as a through-hole fluidically connecting the first and second surfaces of the piston buffer 380. The fluid bleed holes are provided to ensure the same pressure force on the piston buffer 380 on both sides. Furthermore, the piston buffer 380 comprises a lug portion for abutment onto the stop element 346 on the cylinder cover 344. Axial motion boundaries of the piston buffer 380 are determined by the second spring B or the second end of the cylinder housing 340 on one side and by the stop element 346 on the other side. The second spring B is a prestressed spring so that the piston buffer 380 is pushed onto the stop element 346 by the second spring B. In Fig. 3, the end section of the smaller-diameter portion of the main piston 360 is shown accommodated in the recessed portion of the piston buffer 380.

The second spring B is arranged between and abuts on the inner wall surface of the second end of the cylinder housing 340, hence on the inner wall surface of the cylinder cover 344, and on the second surface of the piston buffer 380. The second spring B is formed to bias the lug portion of the piston buffer 380 into abutment onto the stop element 346 on the cylinder cover 344. In Fig. 3, the piston buffer 380 is shown with its lug portion in abutment on the stop element 346.

The second chamber CH B is connected to a first port of the second valve 324 by means of a fluid line. A second port of the second valve 324 is connected to the fluid inlet 310, and a third port of the second valve 324 is connected to the fluid outlet 330. The second valve 324 is operable to connect its first port to either its second or third port. In Fig. 3, the first port of the second valve 324 is connected to the third port of the second valve 324, thus depressurizing the second chamber CH B by connecting the second chamber CH B with the fluid outlet 330.

The floating piston 370 is movable into and out of abutment onto the step portion of the main piston 360, onto a portion of the first surface of the piston buffer 380 and onto the step portion of the cylinder barrel of the cylinder housing 340. In Fig. 3, the floating piston 370 is a shown abutting on the step portion of the main piston 360 and on the portion of the first surface of the piston buffer 380. Thus, the main piston 360, the floating piston 370 and the piston buffer 380 are held in position by a force equilibrium established by spring forces of the first spring A and of the second spring B, wherein a first length of the piston rod 350 protrudes to the outside of the cylinder 150 from the cylinder housing 340.

The third chamber CH C is formed by the inner wall surface of the cylinder barrel of the cylinder housing 340 in the transition region, by surfaces of the main piston 360 and of the floating piston 370 and by the second, third and fourth sealing elements. The third chamber CH C is connected to ambient pressure of the cylinder 150 by means of the bleed opening 342. The third chamber CH C is provided as a compensation chamber for allowing movement of the main and floating pistons 360 and 370 relative to each other as well as relative to the cylinder housing 340. A volume of the third chamber CH C is variable as movement of the main and floating pistons 360 and 370 relative to each other as well as relative to the cylinder housing 340 occurs.

Axial movement of the floating piston 370 is limited by an axial position of the step portion on the internal cylinder wall and the step portion on the main piston 360. The distance between the step portions in the cylinder wall may be determined according to main piston axial dimensions, in order to prevent the floating piston 370 from coming off from the main piston 360.

In other words, Fig. 3 shows a four-state pneumatic work cylinder 150 with two three-way, two-position normally closed valves 322 and 324 or magnet valves and two helical springs A and B. The pneumatic work cylinder 150 has two pistons 360 and 370 and two fluid chambers or load chambers CH A and CH B to provide four dedicated states or positions of the cylinder 150. The first and second springs A and B are pre-stressed or biased in order to maintain the first state or a still-state position of the cylinder 150. The first spring A is formed to push the main piston 360 against or towards the piston buffer 380 through the floating piston 370. The piston buffer 380 is pushed against the fixing ring or stop element 346 by the second spring B. The spring force of the second spring B is equal to or greater than the spring force of the first spring A. The third chamber CH C between the two pistons 360 and 370 does not have pressure connection, and the bleed opening 342 or bleed bore allows fluid flow due to the volume change of the third chamber CH C. Operation of the work cylinder 150 is described in the following.

The first state or still state of the cylinder 150, as shown in Fig. 3, may correspond to selection of a channel of a gearbox in a motor vehicle, e.g. 1-2 gear's channel, the first shift channel of Fig. 1 or the like. In the first state, both magnet valves 322 and 324 are closed, so that ambient pressure is present in the first and second chambers CH A and CH B. Thus, no pneumatic force is acting on the pistons 360 and 370. The spring force of the pre-stressed first spring A acts to push the main piston 360 to the floating piston 370, which is supported by the piston buffer 380. The piston buffer 380 is kept in place by the spring force of the pre-stressed second spring B and the fixing ring. The spring force of the second spring B is greater than or equal to the spring force of the first spring A in order to maintain the still state position with the valves 322 and 324 closed.

Fig. 4 shows a partial cross-sectional view of the fluid cylinder 150 of Fig. 3 in a second state of the cylinder 150. The fluid cylinder 150 and the illustration in Fig. 4 correspond to the fluid cylinder and illustration of Fig. 3, except that the first valve 322 and the second valve 324 are open in Fig. 4, thus allowing pressurised fluid from the fluid inlet 310 to fill the first and second chambers CH A and CH B of the cylinder 150, which makes the main and floating pistons 360 and 370 move towards the first end of the cylinder housing 340, with the floating piston 370 still abutting on the step portion of the main piston 360, thereby compressing the first spring A. Hence, a second length of the piston rod 350 greater than the first length thereof protrudes to the outside of the cylinder 150 from the cylinder housing 340. The piston buffer 380 and the second spring B remain in their respective First-state positions. For reasons of clear representation, the third chamber and the bleed opening are not provided with reference numerals in Fig. 4.

The second state of the cylinder 150, as shown in Fig. 4, may correspond to selection of another channel of a gearbox in a motor vehicle, e.g. 3-4 gear's channel, the second shift channel of Fig. 1 or the like. In the second stage of the cylinder 150, both of the 3/2 magnet valves 322 and 324 are open, so that pressurized fluid flows into the first and second chambers CH A and CH B from the fluid inlet 310 or pressure reservoir. Thus, the first and second chambers CH A and CH B are filled or pressurized with substantially the same pneumatic pressure. The diameter and area differences between the pistons in the first and second chambers CH A and CH B cause the motion of the main piston 360 together with the piston rod 350. Because an effective piston diameter is greater in the second chamber CH B than in the first chamber CH A, a pneumatic force acting on the pistons 360 and 370 from the second chamber CH B exceeds both the spring force of the first spring A and a pneumatic force acting on the main piston 360 from the first chamber CH A. This way, the piston rod 350, the main piston 360 and the floating piston 370 are moved towards the first end of the cylinder housing 340. Movement of the floating piston 370 is stopped by a portion of the floating piston 370 hitting the step portion of the cylinder barrel. When this occurs, force equilibrium keeps the pistons 360 and 370 in their places, with different spring and pneumatic forces from the first and second chambers CH A and CH B acting on the pistons 360 and 370. The first state or still state shown in Fig. 3 can be reached from the second state shown in Fig. 4 by closing both valves 322 and 324, thus exhausting or depressurizing the first and second chambers CH A and CH B. If only one of the valves 322 and 324 years closed, and hence only one of the first and second chambers CH A and CH B is exhausted, the third state or the fourth stage of the cylinder 150 will be reached, depending on which of the first and second chambers CH A and CH B remains pressurized.

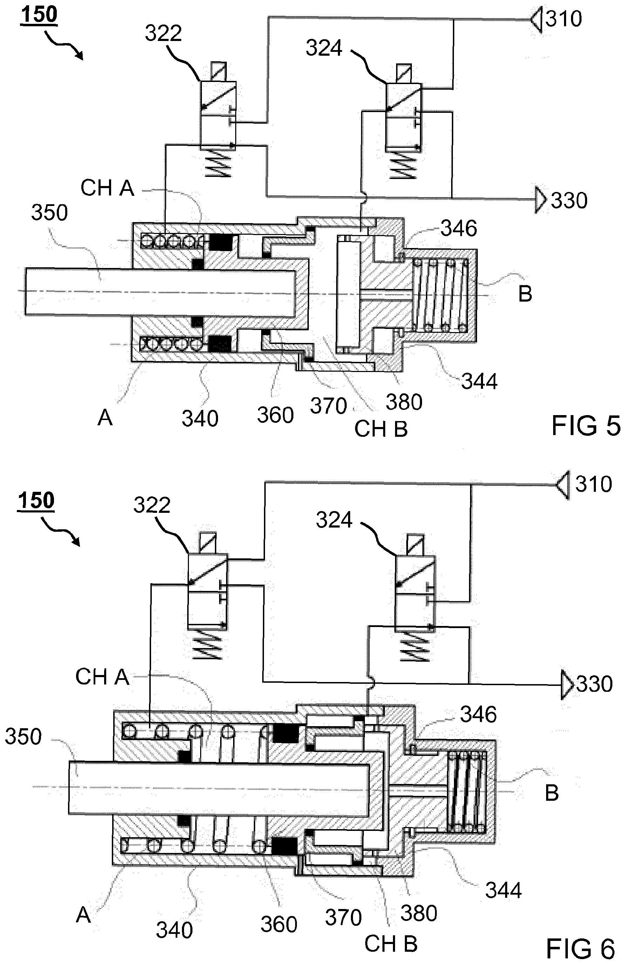

Fig. 5 shows a partial cross-sectional view of the fluid cylinder 150 of Figs. 3 to 4 in a third state of the cylinder 150. The fluid cylinder 150 and the illustration in Fig. 5 correspond to the fluid cylinder of Figs. 3 to 4 and to the illustration of Fig. 4, except that the first valve 322 is closed and the second valve 324 is open in Fig. 5, thus allowing pressurised fluid from the fluid inlet 310 to fill the second chamber CH B of the cylinder 150, while the first chamber CH A is depressurized, which makes the main and floating pistons 360 and 370 move further towards the first end of the cylinder housing 340, with the floating piston 370 no longer abutting on the step portion of the main piston 360, thereby compressing the first spring A more than in Fig. 4. Hence, a third length of the piston rod 350 greater than the second length thereof protrudes to the outside of the cylinder 150 from the cylinder housing 340. The floating piston 370, the piston buffer 380 and the second spring B remain in their respective second-state positions. For reasons of clear representation, the third chamber and the bleed opening are not provided with reference numerals in Fig. 5.

The third state of the cylinder 150, as shown in Fig. 5, may correspond to selection of yet another channel of a gearbox in a motor vehicle, e.g. 5-6 gear's channel, the third shift channel of Fig. 1 or the like. In the third state of the cylinder 150, only the second chamber CH B is pressurized, so that a pneumatic force from the second chamber CH B acts on both of the pistons 360 and 370, with only the spring force of the first spring A counteracting. The floating piston 370 remains at the same position as compared with the second state, and the pneumatic force acting on the main piston 360 from the second chamber CH B acts to push the main piston 360 and the piston rod 350 against the first spring A, until the piston hits a stop surface of the first end of the cylinder housing 340. Hence, the pneumatic force given by the fluid pressure inside the second chamber CH B and the effective area or the diameter of the pistons 360 and 370 is greater than the spring force of the compressed first spring A. The force equilibrium keeps the pistons 360 and 370 in their positions, with a force difference between the pneumatic and spring forces acting on the cylinder stop surface at the first end of the cylinder housing 340. Return to the first state of the cylinder 150 can be accomplished by depressurizing the second chamber CH B.

Fig. 6 shows a partial cross-sectional view of the fluid cylinder 150 of Figs. 3 to 5 in a fourth state of the cylinder 150. The fluid cylinder 150 and the illustration in Fig. 6 correspond to the fluid cylinder of Figs. 3 to 5 and to the illustration of Fig. 3, except that the first valve 322 is open and the second valve 324 is closed in Fig. 6, thus allowing pressurised fluid from the fluid inlet 310 to fill the first chamber CH A of the cylinder 150, while the second chamber CH B is depressurized, which makes the main and floating pistons 360 and 370 and the piston buffer 380 move towards the second end of the cylinder housing 340, with the piston buffer 380 abutting on the step portion of the cylinder cover 344 and no longer abutting on the stop element 346, thereby compressing the second spring B. Hence, a fourth length of the piston rod 350 smaller than the first length thereof protrudes to the outside of the cylinder 150 from the cylinder housing 340. For reasons of clear representation, the third chamber and the bleed opening are not provided with reference numerals in Fig. 6.

The fourth state of the cylinder 150, as shown in Fig. 6, may correspond to selection of yet another channel of a gearbox in a motor vehicle, e.g. reverse gear's channel, the fourth shift channel of Fig. 1 or the like. The fourth state of the cylinder 150 is achieved when only the first chamber CH A is pressurized with fluid, so that the pneumatic and spring forces acting on the main piston 360 act to push the main piston 360, the floating piston 370 and the piston buffer 380 towards the second end of the cylinder housing 340 against the second spring B. The piston buffer 380 abuts on the cylinder cover 344. The force equilibrium keeps pistons 360 and 370 in their positions, with the force difference between the pneumatic and spring forces acting on the cylinder cover 344. Return to the first state of the cylinder 150 can be accomplished by depressurizing the first chamber CH A.

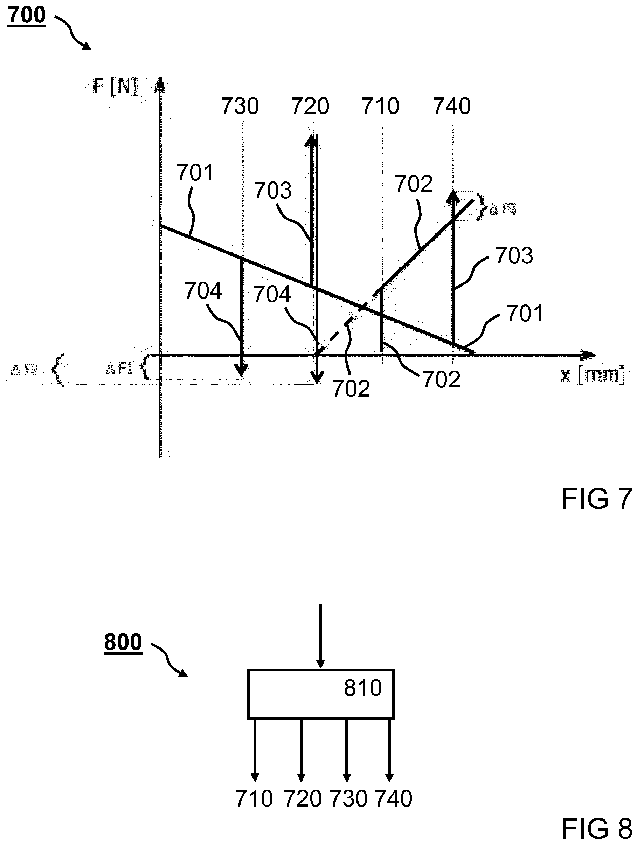

Fig. 7 shows a diagram of forces within the fluid cylinder of Figs. 3 to 6 for the first to fourth states. Forces F are plotted on the abscissa, and distances x of the main piston from the first end of the cylinder housing are plotted on the ordinate. Fig. 7 shows a first spring force 701 of the first spring (A in Figs. 3 to 6), a second spring force 702 of the second spring (B in Figs. 3 to 6), a first pneumatic force 703 on the main piston from the first chamber (CH A in Figs. 3 to 6), a second pneumatic force 704 on the main and floating pistons from the second chamber (CH B in Figs. 3 to 6), a first state 710, a second state 720, a third state 730, a fourth state 740, a force difference $\Delta F1$ between the first spring force 701 and the second pneumatic force 704 acting on the first end of the cylinder housing in the third state 730, a force difference $\Delta F2$ between the first spring force 701, the first pneumatic force 703 and the second pneumatic force 704 acting on the cylinder housing in the second state 720, and a force difference $\Delta F3$ between the first spring force 701, the second spring force 702 and the first pneumatic force 703 acting on the cylinder cover in the fourth state 740. The force difference, i. e. $\Delta F1$, $\Delta F2$, $\Delta F3$, is supported by the cylinder wall.

In the first state 710, the first spring force 701 ($F_{spr(A)}$) is equal to or smaller than the second spring force 702 ($Fsp_{(B)}$).

$$F_{spr(A)} \leq F_{spr(B)}$$

In the second state 720, the first spring force 701 ($F_{spr(A)}$) plus the first pneumatic force 703 given by the pneumatic pressure ($p_{(CHA)}$) inside the first chamber multiplied by the effective area ($A_{pst(360)A}$) of the main piston on the side of the first chamber is equal to or smaller than the second pneumatic force 704 given by the pneumatic pressure ($p_{(CHB)}$) inside the second chamber multiplied by the effective area ($A_{pst(360)B}$) of the main piston on the side of the second chamber plus the pneumatic pressure ($p_{(CHB)}$) inside the second chamber multiplied by the effective area ($A_{pst(370)B}$) of the floating piston on the side of the second chamber.

$$F_{spr(A)} + p_{(CHA)}\, A_{pst(360)A} \leq p_{(CHB)}\, A_{pst(360)B} + p_{(CHB)}\, A_{pst(370)B}$$

In the third state 730, the first spring force 701 ($F_{spr(A)}$) is equal to or smaller than the second pneumatic force 704 given by the pneumatic pressure ($p_{(CHB)}$) inside the second chamber multiplied by the effective area ($A_{pst(360)B}$) of the main piston on the side of the second chamber.

$$F_{spr(A)} \leq p_{(CHB)}\, A_{pst(360)B}$$

In the fourth state 740, the first spring force 701 ($F_{spr(A)}$) plus the first pneumatic force 703 given by the pneumatic pressure ($p_{(CHA)}$) inside the first chamber multiplied by the effective area ($A_{pst(360)A}$) of the main piston on the side of the first chamber is equal to or greater than the second spring force 702 ($F_{spr(B)}$).

$$(F_{spr(A)} + p_{(CHA)} A_{pst(360)A} \geq F_{spr(B)}$$

Fig. 8 shows a flowchart of a method 800 of operating a four-state fluid cylinder. The fluid cylinder may be the fluid cylinder of Figs. 3 to 6. The cylinder comprises a cylinder housing with a first end and an opposite second end. Also, the cylinder comprises a piston rod protruding from the first end of the cylinder housing. The cylinder further comprises a main piston rigidly connected to the piston rod and arranged so as to be movable within the cylinder housing, with a first chamber being formed between the main piston and the first end of the cylinder housing. Furthermore, the cylinder comprises a first spring arranged between the first end of the cylinder housing and the main piston and for biasing the main piston away from the first end of the cylinder housing. The cylinder also comprises a first valve connectable to a fluid supply for controlling fluid pressure inside the first chamber. Moreover, the cylinder comprises a floating piston arranged within the cylinder housing so as to fit around a portion of the main piston and to be movable with respect to the main piston, with a second chamber being formed between the main and floating pistons and the second end of the cylinder housing. The cylinder further comprises a second valve connectable to the fluid supply for controlling fluid pressure inside the second chamber. The cylinder also comprises a piston buffer arranged between the second end of the cylinder housing and the main and floating pistons and for buffering movement of the floating piston. Furthermore, the cylinder comprises a second spring arranged between the second end of the cylinder housing and the piston buffer for biasing the piston buffer away from the second end of the cylinder housing. The cylinder may be operated in conjunction with a motor vehicle transmission, e.g. the motor vehicle transmission of Fig. 1, in order to select one of four shift channels of a four-rail gearbox of the transmission by setting the cylinder to one of the four states 710, 720, 730 and 740 of Fig. 7.

The method 800 comprises a step of controlling 810 each of the first and second valves so as to be open or closed, in response to a selection signal representing a shift channel to be selected by setting the cylinder to one of the four states, wherein (i) by controlling both valves so as to be closed the first and second chambers are depressurized in order to set the cylinder to the first state 710 in which a first length proportion of the piston rod protrudes from the cylinder housing, (ii) by controlling both valves so as to be open the first and second chambers are pressurized with fluid in order to set the cylinder to the second state 720 in which a second length proportion of the piston rod greater than the first length proportion protrudes from the cylinder housing, (iii) by controlling the first valve so as to be closed and the second valve so as to be open the first chamber is depressurized and the second chamber is pressurized with fluid in order to set the cylinder to the third state 730 in which a third length proportion of the piston rod greater than the second length proportion protrudes from the cylinder housing, or (iv) by controlling the first valve so as to be open and the second valve so as to be closed the first chamber is pressurized with fluid and the second chamber is depressurized in order to set the cylinder to the fourth state 740 in which a fourth length proportion of the piston rod smaller than the first length proportion protrudes from the cylinder housing. The step of controlling 810 can be performed repeatedly in order to set the cylinder to different states in an arbitrary manner.

The embodiments described are chosen as mere examples and may be combined in any way as expedient.

List of reference numerals

| | |
|---|---|
| 100 | motor vehicle transmission |
| 105 | four-rail gearbox |
| 110-140 | shift channels |
| 150 | fluid cylinder |
| 200 | fluid cylinder |
| 210 | fluid inlet |
| 222 - 228 | valves |
| 230 | fluid outlet |
| 240 | cylinder housing |
| 250 | piston rod |
| 260 | main piston |
| 270, 280 | floating pistons |

| 310 | fluid inlet |
|---|---|
| 322,324 | valves |
| 330 | fluid outlet |
| 340 | cylinder housing |
| 342 | bleed opening |
| 344 | cylinder cover |
| 346 | stop element |
| 350 | piston rod |
| 360 | main piston |
| 370 | floating piston |
| 380 | piston buffer |
| A | first spring |
| B | second spring |
| CH A | first chamber |
| CH B | second chamber |
| CH C | third chamber |
| 700 | force diagram |
| 701 - 704 | pneumatic and spring forces |
| 710 - 740 | cylinder states |
| 800 | method of operating |
| 810 | step of controlling |

**Claims**

1. Four-state fluid cylinder (150), the cylinder (150) having a cylinder housing (340) with a first end and an opposite second end and a piston rod (350) protruding from the first end of the cylinder housing (340), the cylinder (150) further comprising:

   a main piston (360) rigidly connected to the piston rod (350) and arranged so as to be movable within the cylinder housing (340), with a first chamber (CH A) being formed between the main piston (360) and the first end of the cylinder housing (340);
   a first spring (A) arranged between the first end of the cylinder housing (340) and the main piston (360) and for biasing the main piston (360) away from the first end of the cylinder housing (340);
   a first valve (322) connectable to a fluid supply (310) and for controlling fluid pressure inside the first chamber (CH A);
   a floating piston (370) arranged within the cylinder housing (340) so as to fit around a portion of the main piston (360) and to be movable with respect to the main piston (360), with a second chamber (CH B) being formed between the main and floating pistons (360, 370) and the second end of the cylinder housing (340);
   a second valve (324) connectable to the fluid supply (310) and for controlling fluid pressure inside the second chamber (CH B);
   a piston buffer (380) arranged between the second end of the cylinder housing (340) and the main and floating pistons (360, 370) and for buffering movement of the floating piston (370), wherein the piston buffer (380) comprises fluid bleed holes formed as through-holes; and
   a second spring (B) arranged between the second end of the cylinder housing (340) and the piston buffer (380) for biasing the piston buffer (380) away from the second end of the cylinder housing (340),
   wherein the main piston (360) has a larger-diameter portion facing the first chamber (CH A) and abutting on the cylinder housing (340) inner wall surface, a smaller-diameter portion facing the second chamber (CH B) and a step portion in a transition region between the larger-diameter portion and the smaller-diameter portion,
   wherein the floating piston (370) fits around part of the smaller-diameter portion and is movable into and out of abutment onto the step portion.

2. Cylinder (150) according to claim 1, wherein a spring force (701) of the first spring (A) is smaller than or equal to a spring force (702) of the second spring (B).

3. Cylinder (150) according to one of the preceding claims, wherein the first and second valves (322, 324) are three-way, two-position, normally closed solenoid valves.

4. Cylinder (150) according to one of the preceding claims, wherein the cylinder (150) further comprises a stop element (346) attached to the cylinder housing (340) and onto which the cylinder buffer (380) is biased into abutment by the second spring (B).

5. Cylinder (150) according to one of the preceding claims, wherein an effective cross-sectional area of the main piston (360) on a surface facing the first chamber (CH A) is smaller than effective cross-sectional areas of the main and floating pistons (360, 370) on a surface facing the second chamber (CH B).

6. Cylinder (150) according to one of the preceding claims, wherein the cylinder housing (340) comprises a through-hole (342) in a region of a variable-volume third chamber (CH C) formable between the first and second chambers (CH A, CH B) by movement of the main and floating pistons (360, 370).

7. Motor vehicle transmission (100), comprising:

a four-rail gearbox (105) having four shift channels (110, 120, 130, 140); and
a four-state fluid cylinder (150) according to one of the preceding claims for selecting one of the shift channels (110, 120, 130, 140) at a time.

8. Method (800) of operating a four-state fluid cylinder (150), wherein the cylinder (150) comprises a cylinder housing (340) with a first end and an opposite second end, a piston rod (350) protruding from the first end of the cylinder housing (340), a main piston (360) rigidly connected to the piston rod (350) and arranged so as to be movable within the cylinder housing (340), with a first chamber (CH A) being formed between the main piston (360) and the first end of the cylinder housing (340), a first spring (A) arranged between the first end of the cylinder housing (340) and the main piston (360) and for biasing the main piston (360) away from the first end of the cylinder housing (340), a first valve (322) connected to a fluid supply (310) and for controlling fluid pressure inside the first chamber (CH A), a floating piston (370) arranged within the cylinder housing (340) so as to fit around a portion of the main piston (360) and to be movable with respect to the main piston (360), with a second chamber (CH B) being formed between the main and floating pistons (360, 370) and the second end of the cylinder housing (340), a second valve (324) connected to the fluid supply (310) and for controlling fluid pressure inside the second chamber (CH B), a piston buffer (380) arranged between the second end of the cylinder housing (340) and the main and floating pistons (360, 370) and for buffering movement of the floating piston (370), wherein the piston buffer (380) comprises fluid bleed holes formed as through-holes, and a second spring (B) arranged between the second end of the cylinder housing (340) and the piston buffer (380) for biasing the piston buffer (380) away from the second end of the cylinder housing (340), wherein the main piston (360) has a larger-diameter portion facing the first chamber (CH A) and abutting on the cylinder housing (340) inner wall surface, a smaller-diameter portion facing the second chamber (CH B) and a step portion in a transition region between the larger-diameter portion and the smaller-diameter portion, wherein the floating piston (370) fits around part of the smaller-diameter portion and is movable into and out of abutment onto the step portion, the method (800) comprising:

controlling (810) the first and second valves (322, 324) so that (i) the first and second chambers (CH A, CH B) are depressurized in order to set the cylinder (150) to a first state (710) in which a first length proportion of the piston rod (350) protrudes from the cylinder housing (340), (ii) the first and second chambers (CH A, CH B) are pressurized with fluid in order to set the cylinder (150) to a second state (720) in which a second length proportion of the piston rod (350) greater than the first length proportion protrudes from the cylinder housing (340), (iii) the first chamber (CH A) is depressurized and the second chamber (CH B) is pressurized with fluid in order to set the cylinder (150) to a third state (730) in which a third length proportion of the piston rod (350) greater than the second length proportion protrudes from the cylinder housing (340), or (iv) the first chamber (CH A) is pressurized with fluid and the second chamber (CH B) is depressurized in order to set the cylinder (150) to a fourth state (740) in which a fourth length proportion of the piston rod (350) smaller than the first length proportion protrudes from the cylinder housing (340).

9. Method (800) according to claim 8, wherein the step of controlling (800) is performed repeatedly in order to set the cylinder (150) to different states (710, 720, 730, 740) in an arbitrary manner.

**Patentansprüche**

1. Vierzustands-Fluidzylinder (150) mit einem Zylindergehäuse (340) mit einem ersten Ende und einem diesem gegenüberliegenden zweiten Ende und einer aus dem ersten Ende des Zylindergehäuses (340) hervorstehenden Kolbenstange (350), wobei der Zylinder (150) weiter umfasst:

einen starr mit der Kolbenstange (350) verbundenen Hauptkolben (360), der beweglich im Zylindergehäuse (340) angeordnet ist, mit einer zwischen dem Hauptkolben (360) und dem ersten Ende des Zylindergehäuses (340) ausgebildeten ersten Kammer (CH A);

eine zwischen dem ersten Ende des Zylindergehäuses (340) und dem Hauptkolben (360) angeordnete erste Feder (A) zur Vorspannung des Hauptkolbens (360) vom ersten Ende des Zylindergehäuses (340) weg;

ein an eine Fluidversorgung (310) anschließbares erstes Ventil (322) zur Regelung des Fluiddrucks in der ersten Kammer (CH A);

einen fliegenden Kolben (370), der so im Zylindergehäuse (340) angeordnet ist, dass er um eine Partie des Hauptkolbens (360) passt und im Verhältnis zum Hauptkolben (360) beweglich ist, wobei zwischen dem Haupt- und dem fliegenden Kolben (360, 370) und dem zweiten Ende des Zylindergehäuses (340) eine zweite Kammer (CH B) ausgebildet ist;

ein an die Fluidversorgung (310) anschließbares zweites Ventil (324) zur Regelung des Fluiddrucks in der zweiten Kammer (CH B);

einen zwischen dem zweiten Ende des Zylindergehäuses (340) und dem Haupt- und dem fliegenden Kolben (360, 370) angeordneten Kolbendämpfer (380) zum Dämpfen der Bewegung des fliegenden Kolbens (370), wobei der Kolbendämpfer (380) als Durchgangslöcher ausgebildete Entlüftungslöcher aufweist; und

eine zwischen dem zweiten Ende des Zylindergehäuses (340) und dem Kolbendämpfer (380) angeordnete zweite Feder (B) zur Vorspannung des Kolbendämpfers (380) vom zweiten Ende des Zylindergehäuses (340) weg,

wobei der Hauptkolben (360) eine der ersten Kammer (CH A) zugekehrte und an die innere Wandfläche des Zylindergehäuses (340) angrenzende Partie mit größerem Durchmesser, eine der zweiten Kammer (CH B) zugekehrte Partie mit kleinerem Durchmesser und eine Stufenpartie in einem Übergangsbereich zwischen der Partie mit größerem Durchmesser und der Partie mit kleinerem Durchmesser aufweist, wobei der fliegende Kolben (370) um einen Teil der Partie mit kleinerem Durchmesser passt und in die und aus der Anlage an der Stufenpartie bewegt werden kann.

2. Zylinder (150) nach Anspruch 1, wobei eine Federkraft (701) der ersten Feder (A) geringer als oder gleich ist wie eine Federkraft (702) der zweiten Feder (B).

3. Zylinder (150) nach einem der vorhergehenden Ansprüche, wobei das erste und das zweite Ventil (322, 324) Zweiweg-Zweistellungs-Öffnungsmangetventile sind.

4. Zylinder (150) nach einem der vorhergehenden Ansprüche, wobei der Zylinder (150) weiter ein am Zylindergehäuse (340) befestigtes Anschlagelement (346) umfasst, in dessen Richtung der Zylinderdämpfer (380) zwecks Anlage von der zweiten Feder (B) vorgespannt wird.

5. Zylinder (150) nach einem der vorhergehenden Ansprüche, wobei eine wirksame Querschnittsfläche des Hauptkolbens (360) auf einer der ersten Kammer (CH A) zugekehrten Oberfläche kleiner ist als eine wirksame Querschnittsfläche des Haupt- und des fliegenden Kolbens (360, 370) auf einer der zweiten Kammer (CH B) zugekehrten Oberfläche.

6. Zylinder (150) nach einem der vorhergehenden Ansprüche, wobei das Zylindergehäuse (340) in einem Bereich einer dritten Kammer (CH C) mit einstellbarem Volumen, die durch die Bewegung des Haupt- und des fliegenden Kolbens (360, 370) zwischen der ersten und der zweiten Kammer (CH A, CH B) gebildet werden kann, eine Durchgangsbohrung (342) aufweist.

7. Kraftfahrzeuggetriebe (100), umfassend:

ein Vierschienen-Getriebe (105) mit vier Schaltkanälen (110, 120, 130, 140); und
einen Vierzustands-Fluidzylinder (150) nach einem der vorhergehenden Ansprüche zur jeweiligen Auswahl eines der Schaltkanäle (110, 120, 130, 140).

8. Verfahren (800) zum Betrieb eines Vierzustands-Fluidzylinders (150), wobei der Zylinder (150) ein Zylindergehäuse (340) mit einem ersten Ende und einem diesem gegenüberliegenden zweiten Ende, eine aus dem ersten Ende des Zylindergehäuses (340) hervorstehenden Kolbenstange (350), einen starr mit der Kolbenstange (350) verbundenen Hauptkolben (360), der beweglich im Zylindergehäuse (340) angeordnet ist, mit einer zwischen dem Hauptkolben (360) und dem ersten Ende des Zylindergehäuses (340) ausgebildeten ersten Kammer (CH A), eine zwischen dem ersten Ende des Zylindergehäuses (340) und dem Hauptkolben (360) angeordnete erste Feder (A) zur Vorspannung des Hauptkolbens (360) vom ersten Ende des Zylindergehäuses (340) weg, ein an eine Fluidversorgung (310) angeschlossenes erstes Ventil (322) zur Regelung des Fluiddrucks in der ersten Kammer (CH A), einen fliegenden Kolben (370), der so im Zylindergehäuse (340) angeordnet ist, dass er um eine Partie des Hauptkolbens (360) passt und im Verhältnis zum Hauptkolben (360) beweglich ist, wobei zwischen dem Haupt- und dem fliegenden Kolben (360, 370) und dem zweiten Ende des Zylindergehäuses (340) eine zweite Kammer (CH B) ausgebildet ist, ein an die Fluidversorgung (310) angeschlossenes zweites Ventil (324) zur Regelung des Fluiddrucks in der zweiten Kammer (CH B), einen zwischen dem zweiten Ende des Zylindergehäuses (340) und dem Haupt- und dem fliegenden Kolben (360, 370) angeordneten Kolbendämpfer (380) zum Dämpfen der Bewegung des fliegenden Kolbens (370), wobei der Kolbendämpfer (380) als Durchgangslöcher ausgebildete Entlüftungslöcher aufweist, und eine zwischen dem zweiten Ende des Zylindergehäuses (340) und dem Kolbendämpfer (380) angeordnete zweite Feder (B) zur Vorspannung des Kolbendämpfers (380) vom zweiten Ende des Zylindergehäuses (340) weg umfasst, wobei der Hauptkolben (360) eine der ersten Kammer (CH A) zugekehrte und an die innere Wandfläche des Zylindergehäuses (340) angrenzende Partie mit größerem Durchmesser, eine der zweiten Kammer (CH B) zugekehrte Partie mit kleinerem Durchmesser und eine Stufenpartie in einem Übergangsbereich zwischen der Partie mit größerem Durchmesser und der Partie mit kleinerem Durchmesser aufweist, wobei der fliegende Kolben (370) um einen Teil der Partie mit kleinerem Durchmesser passt und in die und aus der Anlage an der Stufenpartie bewegt werden kann, das Verfahren (800) umfassend:

die derartige Steuerung des ersten und des zweiten Ventils (322, 324), dass (i) die erste und die zweite Kammer (CH A, CH B) druckentlastet werden, um den Zylinder (150) in einen ersten Zustand (710) zu bringen, in dem ein ersten Längenanteil der Kolbenstange (350) aus dem Zylindergehäuse (340) hervorsteht, (ii) die erste und die zweite Kammer (CH A, CH B) mit Fluiddruck beaufschlagt werden, um den Zylinder (150) in einen zweiten Zustand (720) zu bringen, in dem ein zweiter Längenanteil der Kolbenstange (350), der größer ist als der erste Längenanteil, aus dem Zylindergehäuse (340) hervorsteht, (iii) die erste Kammer (CH A) druckentlastet wird und die zweite Kammer (CH B) mit Fluiddruck beaufschlagt wird, um den Zylinder (150) in einen dritten Zustand (730) zu bringen, in dem ein dritter Längenanteil der Kolbenstange (350), der größer ist als der zweite Längenanteil, aus dem Zylindergehäuse (340) hervorsteht, oder (iv) die erste Kammer (CH A) mit Fluiddruck beaufschlagt wird und die zweite Kammer (CH B) druckentlastet wird, um den Zylinder (150) in einen vierten Zustand (740) zu bringen, in dem ein vierter Längenanteil der Kolbenstange (350), der kleiner ist als der erste Längenanteil, aus dem Zylindergehäuse (340) hervorsteht.

**9.** Verfahren (800) nach Anspruch 8, wobei der Schritt der Steuerung (800) wiederholt ausgeführt wird, um den Zylinder (150) beliebig in verschiedene Zustände (710, 720, 730, 740) zu bringen.

## Revendications

**1.** Cylindre (150) pour fluide à quatre états, le cylindre (150) définissant un logement (340) de cylindre ayant une première extrémité et une seconde extrémité opposée et une tige (350) de piston faisant saillie de la première extrémité du logement (340) de cylindre, le cylindre (150) comprenant, en outre :

un piston (360) principal relié rigidement à la tige (350) du piston et agencé de manière à être mobile dans le logement (340) de cylindre, une première chambre (CHA A) étant formée entre le piston (360) principal et la première extrémité du logement (340) de cylindre ;
un premier ressort (A) disposé entre la première extrémité du logement (340) de cylindre et le piston (360) principal et destiné à éloigner le piston (360) principal de la première extrémité du logement (340) de cylindre ;
un première vanne (322) pouvant être reliée à une alimentation (310) en fluide et destinée à commander la pression d'un fluide à l'intérieur de la première chambre (CH A) ;
un piston (370) flottant disposé dans le logement (340) de cylindre, de manière à s'adapter autour d'une partie du piston (360) principal et à être mobile par rapport au piston (360) principal, une deuxième chambre (CH B) étant formée entre les pistons (360, 370) principal et flottant et la seconde extrémité du logement (340) de cylindre ;
une deuxième vanne (324) pouvant être reliée à l'alimentation (310) en fluide et destinée à commander la pression d'un fluide à l'intérieur de la deuxième chambre (CH B) ;
un tampon (380) de piston disposé entre la seconde extrémité du logement (340) de cylindre et les pistons (360, 370) principal et flottant et destiné à tamponner le déplacement du piston (370) flottant, le tampon (380) de piston comprenant des trous d'évacuation de fluide sous la forme de trous traversants et un deuxième ressort (B) disposé entre la seconde extrémité du logement (340) de cylindre et le tampon (380) de piston pour faire s'éloigner le tampon (380) de piston de la seconde extrémité du logement (340) de cylindre, dans lequel le piston (360) principal a une partie de diamètre plus grand faisant face à la première chambre (CH A) et venant buter sur la surface de paroi intérieure du logement (340) de cylindre, une partie de diamètre plus petit faisant face à la deuxième chambre (CH B) et une partie en gradin dans une région de transition entre la partie de diamètre plus grand et la partie de diamètre plus petit, le piston (370) flottant s'adaptant autour d'une partie de la partie de diamètre plus petit et étant mobile pour venir en et hors de butée sur la partie en gradin.

2. Cylindre (150) suivant la revendication 1, dans lequel une force (701) de ressort du premier ressort (A) est plus petite ou égale à une force (702) de ressort du deuxième ressort (B).

3. Cylindre (150) suivant l'une des revendications précédentes, dans lequel les première et deuxième vannes (322, 324) sont des électrovannes à trois voies, à deux positions et normalement fermées.

4. Cylindre (150) suivant l'une des revendications précédentes, dans lequel le cylindre (150) comprend, en outre, un élément (346) de butée fixé au logement (340) de cylindre et sur lequel le tampon (380) de cylindre vient en butée sous l'effet du deuxième ressort (B).

5. Cylindre (150) suivant l'une des revendications précédentes, dans lequel une surface efficace de section transversale du piston (360) principal ou une surface faisant face à la première chambre (CH A) est plus petite que des surfaces efficaces de section transversale des pistons (360, 370) principal et flottant sur une surface faisant face à la deuxième chambre (CH B).

6. Cylindre (150) suivant l'une des revendications précédentes, dans lequel le logement (340) de cylindre comprend un trou (342) traversant dans une région d'une troisième chambre (CH C) de volume variable pouvant se former entre les première et deuxième chambres (CH A, CH B) par le déplacement des pistons (360, 370) principal et flottant.

7. Transmission (100) de véhicule à moteur, comprenant :

une boîte de vitesse (105) à quatre rails ayant quatre canaux (110, 120, 130, 140) de changement de vitesse et un cylindre (150) pour fluide à quatre états suivant l'une des revendications précédentes pour sélectionner un à la fois des canaux (110, 120, 130, 140) de changement de vitesse.

8. Procédé (800) pour faire fonctionner un cylindre (150) pour fluide à quatre états, le cylindre (150) comprenant un logement (340) de cylindre ayant une première extrémité et une seconde extrémité opposée, une tige (350) de piston faisant saillie de la première extrémité du logement (340) de cylindre, un piston (360) principal relié rigidement à la tige (350) de piston et agencé de manière à être mobile dans le logement (340) de cylindre, une première chambre (CHA A) étant formée entre le piston (360) principal et la première extrémité du logement (340) de cylindre, un premier ressort (A) disposé entre la première extrémité du logement (340) de cylindre et le piston (360) principal et destiné à éloigner le piston (360) principal de la première extrémité du logement (340) de cylindre, une première vanne (322) reliée à une alimentation (310) en fluide et destinée à commander la pression d'un fluide à l'intérieur de la première chambre (CH A), un piston (370) flottant disposé dans le logement (340) de cylindre, de manière à s'adapter autour d'une partie du piston (360) principal et à être mobile par rapport au piston (360) principal, une deuxième chambre (CH B) étant formée entre les pistons (360, 370) principal et flottant et la seconde extrémité du logement (340) de cylindre, une deuxième vanne (324) reliée à l'alimentation (310) en fluide et destiné à commander la pression d'un fluide à l'intérieur de la deuxième chambre (CH B), un tampon (380) de piston disposé entre la seconde extrémité du logement (340) de cylindre et les pistons (360, 370) principal et flottant et destiné à tamponner le déplacement du piston (370) flottant, le tampon (380) de piston comprenant des trous d'évacuation de fluide sous la forme de trous traversants et un deuxième ressort (B) disposé entre la seconde extrémité du logement (340) de cylindre et le tampon (380) de piston pour faire s'éloigner le tampon (380) de piston de la seconde extrémité du logement (340) de cylindre, dans lequel le piston (360) principal a une partie de diamètre plus grand faisant face à la première chambre (CH A) et venant buter sur la surface de paroi intérieure du logement (340) de cylindre, une partie de diamètre plus petit faisant face à la deuxième chambre (CH B) et une partie en gradin dans une région de transition entre la partie de diamètre plus grand et la partie de diamètre plus petit, le piston (370) flottant s'adaptant autour d'une partie de la partie de diamètre plus petit et étant mobile pour venir en et hors de butée sur la partie en gradin, le procédé (800) comprenant :

commander (810) les première et deuxième vannes (322, 324), de manière à ce que (i) la première et la deuxième chambres (CH A, CH B) soient dépressurisées, afin de mettre le cylindre (150) dans un premier état (710), dans lequel une première proportion en longueur de la tige (350) du piston fait saillie du logement (340) de cylindre, (ii) les première et deuxième chambres (CH A, CH B) soient pressurisées par du fluide, afin de mettre le cylindre (150) dans un deuxième état (720), dans lequel une deuxième proportion en longueur de la tige (350) de piston plus grande que la première proportion en longueur fasse saillie du logement (340) de cylindre, (iii) la première chambre (CH A) soit dépressurisée et la deuxième chambre (CH B) soit pressurisée par du fluide, afin de mettre le cylindre (150) dans un troisième état (730), dans lequel une troisième proportion en longueur de la tige (350) du piston plus grande que la deuxième proportion en longueur fasse saillie du logement (340) de cylindre ou (iv) la première chambre (CH A) soit pressurisée par du fluide et la deuxième chambre (CH B) soit dépressurisée, afin de mettre le cylindre (150) dans un quatrième état (740), dans lequel une quatrième proportion en longueur de la tige (350) du piston plus petite que la première proportion en longueur fasse saillie du logement (340) de cylindre.

9. Procédé (800) suivant la revendication 8, dans lequel le stade de commande (800) est effectué de manière répétée, afin de mettre le cylindre (150) dans des états (710, 720, 730, 740) différents d'une manière arbitraire.

**100**

**105**

140   110   120   130

(R)   (1)   (3)   (5)

150

(2)   (4)   (6)

FIG 1

**200**

222

226

224

210

228

230

250

270   260   240   280

FIG 2

**FIG 3**

**FIG 4**

**150**

322

324

310

CH A

350

346

B

A    340    360    370    380    344

CH B    **FIG 5**

**150**

322

324

310

CH A

350

346

B

A    340    360    370    380    344

CH B    **FIG 6**

700

F [N]

730 720 710 740

701

703

702

704 704

702

702

Δ R2 Δ F1

702

701

703

Δ R

x [mm]

FIG 7

800

810

710 720 730 740

FIG 8

**EP 2 698 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006035938 B4

- EP 0803651 A1